# EUROPEAN PATENT SPECIFICATION

(11) **EP 2 677 223 B1**
(45) Date of publication and mention of the grant of the patent: **05.08.2015**
(21) Application number: 13171013.9
(22) Date of filing: 07.06.2013
(51) Int. Cl.: F16L 33/207

(54) **Fitting for connecting pipes, in particular flexible pipes**
Muffe zum Verbinden von Rohren, insbesondere flexiblen Rohren
Raccord destiné à raccorder des tuyaux, notamment des tuyaux flexibles

(30) Priority: 19.06.2012 IT MI20121068
(43) Date of publication of application: 25.12.2013
(73) Proprietor: I.V.A.R. S.P.A., 25080 Prevalle (BS) (IT)
(72) Inventor: Bertolotti, Umberto, 25080 Prevalle (BS) (IT)
(74) Representative: Galassi, Alessandro

(56) References cited:
- EP-A1- 1 653 142
- GB-A- 554 002
- US-A- 2 250 286
- US-A1- 2010 123 310
- US-B1- 6 581 982

## Description

The present invention relates to a fitting for connecting pipes, and is particularly applicable in the field of the connecting of flexible pipes for pressurised fluid circulation, for example water.

As is known, the fitting of flexible pipes is generally realised by predisposing a fitting having an element of a rigid tubular shape, provided with two or more terminations couplable to a same number of pipes and able to place the pipes in reciprocal fluid communication with a fluid seal towards the outside environment.

One or more terminations of the fitting, destined for coupling with a flexible pipe, generally exhibits a profiled anchoring surface on which the flexible pipe is forced to adhere, and on which the flexible pipe stably grips following an elastic or permanent deformation. The anchoring surface can be realized by a surface exhibiting annular grooves, to which the pipe is forced to couple by virtue of the elastic deformability thereof. The anchoring surfaces are usually realized externally of the termination, and the termination itself is then inserted into an end of the pipe, to which it stably associates. The terminations of the fittings can all be provided with a grooved anchoring surface, for connecting pipes by deformation, or can be made for example with a threaded surface, on which the pipe is forced to engage by screwing; alternatively, a valve can be connected to the threaded surface of the terminal. With the aim of guaranteeing a fluid seal between the inside of the tubular element and the outside of the pipe associated thereto, and thus preventing leakage of fluid towards the outside, external shields are usually employed (typically known as sleeves), for example metallic, which surround the end of the pipe coupled to the tubular element and are thus permanently deformed, for example by impressing a crushing with pliers, such as to generate a compression on the underlying pipe. In this way, the pipe is forced to crush against the underlying pipe, generating a stable coupling therewith. These connections are generally known as press-fits.

With the aim of improving the fluid seal between the inside of the fitting/pipe connection and the external environment, seals are generally provided, to be interposed between each termination of the fitting and the respective piping to which it is coupled. In some types of known fittings, these seals, generally 0-rings, radially project beyond the volume of the grooves present on the anchoring surface and in this way they are able to provide a fluid seal even following the simple inserting of the pipe on the termination of the fitting; additionally, the seals can then be further deformed together with the pipe following the crushing of the external sleeve, if present, so as to adhere more effectively to both the termination of the fitting and to the pipe keyed thereto and prevent fluid leakage between the two towards the outside environment, even in high working pressure conditions.

The type of fitting described above exhibits some drawbacks. In fact, especially in complex plants and with a high number of connections, it is often advantageous to perform all the fittings in a first step, and then after, with the connections fitted, to proceed to blocking the external sleeves by crushing, for example using dedicated pliers (well known to operators and technical experts in the sector). This setting-up mode can lead, due to the large number of fittings to be blocked, to accidentally omitting to block one or more of the sleeve-pipe couplings. This can also happed for domestic plants or in any case plants that are less complex, as they are attributable to accidental occurrences or simple forgetfulness. It has been noted that during the step of testing the plant, and in particular the pressuring thereof, also following a missed blocking of one or more sleeves on the pipe, the seals predisposed between the terminations of the connecting elements and the pipes coupled thereto generate in any case a sufficient seal to prevent leakage and thus localized loss of fluid, also at non-blocked couplings. This is due to the fact that the seals deform in any case, though slightly, following insertion of the pipes of the terminal, and thus sets the seal in the sealed condition, sufficient to prevent leakage. Unfortunately the fluid seal of the non-blocked seals can give rise to leakage over time, for example due to de-inserting of the pipes, which leaks are however not encountered during the testing step for the above-mentioned reasons.

To obviate this drawback, use is known of a different type of fitting, in which the seals are wound about the terminal of the fitting in such a way as not to project beyond the radial volume defined by the grooves of the anchoring surface. In this way, following the predisposing of the pipe on the fitting termination, the seals do not interfere with the pipe and thus do not realize any fluid seat between the inside of the fitting and the outside of the pipe. Thus, during the plant testing step (for example with a testing pressure of greater than 1 bar), the fitting-pipe connection inevitably loses liquid, and this can be immediately observed in the form of a load loss on the plant; this is indicative of the fact that a fitting has not been correctly blocked on the respective pipe.

In this context, it has been found that the mere use of small-diameter seals (i.e. smaller 0-rings, such as not to pass beyond the crests of the anchoring surfaces), though enabling the detecting of the missed pinching, determines however a poor seal of the fitting even after blocking; this is due to the reduction of the dimensions of the seal, which does not correctly interfere with the terminal and pipe, even when the sleeve is pressed.

To obviate this drawback, the prior art has proposed two different solutions. A first known solution includes the use of special seals affording localized radial irregularities, i.e. portions along the development circumference of the seal that are "lowered" with respect to the rest of the seal, which has a nominal and constant diameter. Each lowering in the seal realizes a passage between the two sides of the seal (with respect to the central axis of the seal which corresponds to the fluid flow direction); in this way the non-blocking of the sleeve corresponds to a poor crushing of the seal and thus to a leakage of fluid through the passages. If, on the contrary, the sleeve is correctly blocked, the seal is pressed radially to close the passages and no leakage ensues. In substance, the special seals enable easy verification of the correct blocking of all the sleeves of the plant, but present further drawbacks. In fact, it is clear that this solution can be implemented only on sufficiently large seals (in terms of diameter and/or thickness), i.e. provided with a sufficient quantity of material, such as to enable realizing the lowered portions without weakening the seal (and making it susceptible to wear and breakage).

Further, manufacturing the special seals as well as making them sufficiently available on the market and providing replacement seals can be complicated and expensive. In the case of small seals it is possible to reduce the internal diameter of the connecting conduit (freeing up space to be destined to the thickness of the seal), but this limits the fluid flow in the fitting. Further, the reduction of the internal diameter of the fitting can sometimes not respond to the specifications required for obtaining product certification.

An alternative solution to the above is described in patent document EP 1 653 142. This solution includes use of a sleeve having an annular portion with an increased thickness in an external direction with respect to the rest of the sleeve (in which the thickness is constant); the internal surface of the sleeve is cylindrical and has a uniform diameter, like known-type fittings. The above-described annular portion enables having available, during the blocking step, of a quantity of additional material in the part of sleeve destined to press the underlying seal (not projecting beyond the anchoring grooves). This would enable obtaining a correct deformation of the seal and therefore an adequate fluid seal. The correct functioning of the solution of the patent is subordinated to the lack of "gaps" in the internal surface of the sleeve, in particular at the external annular portion of the sleeve. In fact, the additional material of the external portion works by transferring the pressure of the pliers to the underlying seal only if the internal surface of the sleeve is maintained in contact with the pipe interposed between the sleeve and the seal.

However the Applicant has found that the latter solution described above is not free of relevant drawbacks. In fact, the manufacturing of a sleeve of the type described in patent EP 1 653 142, due exactly to the conformation thereof, is technically complex and characterised by a high cost.

It is further known from patent GB554002 a coupling comprising a sleeve and an insert; an annular portion of the hose is removed and replaced by a separate ring; the sleeve is then radially contracted around the ring, so that the part of the hose trapped between the ring and the closed end of the coupling is under considerable pressure. Patent US2010123310 describes a hose end coupling comprising a unitary one-piece stem having an exterior barb end portion and an exterior ferrule interface portion, with a unitary one-piece radially crushable ferrule disposed over the stem, with a crushable socket portion disposed about the barb end portion, and a torque communication portion defined between the socket portion and the attachment portion.

Patent US2250286 describes a coupling member for attachment to a hose, including a first sleeve adapted to be inserted in the hose and a second sleeve adapted to encircle the end of a hose; the second sleeve has a rounded annular protuberant portion extending around the sleeve between the ends thereof and projecting radially outward beyond the adjoining portions of the sleeve at each side thereof; the protuberant portion has an internal annular recess therein and a split ring of rounded cross section in said reces. Patent US6581982 describes a process for connecting a pipe in the region of its pipe end to a pipe coupling comprising at least one support sleeve with engagement elements.

In this situation the aim underpinning the present invention, in its various aspects and/or embodiments, is to provide a fitting for connection of pipes that can obviate one or more of the mentioned drawbacks.

A further aim of the present invention is to provide a fitting for connecting pipes that can autonomously evidence, during testing or in any case on first pressurizing, a missed blocking of the fitting on one or more pipes associated thereto.

A further aim of the present invention is to provide a fitting for connecting connection of pipes characterised by a low cost of realisation.

A further aim of the present invention is to provide a fitting for connecting pipes that is simple and rapid to realize.

These aims, and others besides, which will more fully emerge during the following description, are substantially attained by a fitting for connecting pipes according to one or more of the accompany claims, each of which taken one by one (without the relative dependencies) or in any combination with the other claims, as well as according to the following aspects and/or embodiments, variously combined, also with the above-mentioned claims.

In a first aspect, the invention relates to a fitting for connecting pipes, in particular including at least a flexible pipe, comprising:
- at least a first tubular element provided, at an end thereof, with a first inlet/outlet opening and defining internally thereof a first conduit;
- at least a second tubular element provided, at an end thereof, with a second inlet/outlet opening and defining internally thereof a second conduit,
said first tubular element and second tubular element being connected with one another, in correspondence of respective ends opposite to the respective inlet/outlet opening, such that said first conduit and second conduit are in communication with one another and overall define an assembly conduit, putting said first opening and said second opening in fluid communication.

In an aspect, the fitting further comprises at least first blocking means comprising:
- a sleeve associable to the first tubular element such as to surround the first tubular element externally and to create, between the sleeve and the first tubular element, an annular housing destined to insertingly receive a pipe, the pipe being interposed between the first tubular element and the sleeve, said sleeve having an internal surface, facing towards the first tubular element, and an external surface, and being provided with at least an annular protrusion extending from said external surface and with at least an annular gully afforded in said internal surface at said annular protrusion;
- at least a blocking ring housable in said at least an annular gully of said sleeve; said first blocking means being configured for operating at least in an insertion configuration, in which they enable insertion of a pipe into said annular housing, and a blocked configuration, in which they stably and fluid-sealingly block the pipe in the annular housing.

In an aspect the passage of the first blocking means from the insertion configuration to the blocking configuration occurs by means of a radial deformation of the sleeve, nearingly to the first tubular element, such as to compress the pipe between the sleeve and the first tubular element internally of the annular housing, the deformation being realised by acting on the external surface of the sleeve with a clamping profile of a blocking pliers, able to plastically deform the sleeve.

In an aspect the first tubular element and the sleeve have a hollow cylindrical conformation and have a same longitudinal development axis. In an aspect said blocking ring is housed in said annular gully of the sleeve in such a way as to be substantially flush with the internal surface of the sleeve and/or such as to realise an internal surface of the sleeve that is substantially cylindrical and/or has a constant diameter along the whole development of the sleeve along the longitudinal development axis.

In an aspect the annular protrusion and said annular gully are realised substantially in a same position of the sleeve along the longitudinal development axis.

In an aspect the first tubular element comprises at least a first sealing element, externally enveloping the tubular element in such a way as to be interposed between the tubular element and a pipe inserted in said annular housing, said first sealing element being deformable, when the first blocking means are in blocking configuration, such as to inhibit a fluid communication between the first conduit and an external surface of the first tubular element.

In an aspect, said annular protrusion and said annular gully are realised in a position of the sleeve, along said longitudinal axis development, that is close to, or at, the position occupied by the first sealing element on the tubular element, or the annular protrusion and the annular gully are substantially aligned along a plane that is perpendicular to the longitudinal development axis.

In an aspect, the blocking ring is a closed ring, having a toroidal conformation, or - alternatively - it is a ring provided with a cut parallel to a central axis of the ring.

In an aspect, the first tubular element comprises a plurality of ribs, extending externally of the tubular element and having a substantially annular profile, the ribs defining a plurality of grips for the pipe when the first blocking means are in the blocking configuration. In an aspect the ribs extend radially from the external surface of the first tubular element over a rib diameter that is greater than an external diameter of the first tubular element.

In an aspect, the first sealing element is enveloped externally of the first tubular element, between two adjacent ribs of the plurality of ribs, such as to be comprised radially within the rib diameter or such as to be substantially flush with the development of the ribs.

In an aspect, the first tubular element comprises a second seal element, substantially identical to the first seal element, wound externally of the first tubular element in a different position along the longitudinal development axis.

In an aspect the first and/or second seal element is toroidal, preferably being an 0-ring.

In an aspect, the annular protrusion and the annular gully of the sleeve are realised in a position of the sleeve, along the longitudinal development axis, intermediate with respect to the positions occupied by the first and the second seal element on the first tubular element, in such a way that when the first blocking means are in the blocking configuration, the thrust of the locking ring on the underlying piping portion determines a deformation of the first and the second seal element and sealed blocking of the pipe on the first tubular element.

In an aspect the fitting comprises second blocking means comprising:
- a respective sleeve associated to the second tubular element in such a way as to surround it externally and to create, between the sleeve and the second tubular element, a respective annular housing destined to insertingly receive a pipe, the pipe being interposed between the second tubular element and the sleeve, said respective sleeve having an internal surface, facing towards the second tubular element, and an external surface, and being provided with at least an annular protrusion extending from the external surface and at least an annular gully fashioned in the internal surface at the annular protrusion;
- a respective blocking ring housable in the at least an annular gully of the sleeve;
said second blocking means being preferably identical to the first blocking means and/or provided with one or more of the characteristics described in the aspects and/or claims in relation to the first blocking means..

In an alternative aspect, the second tubular element comprises connecting means to a fluid source, for example a conduit, a tap or a tank.

In an aspect, the connecting means comprise a threaded portion destined to connect to a corresponding counter-thread of the fluid source such as to set the second tubular element in fluid communication with the fluid source.

In an aspect, according to a possible embodiment of the invention, the fitting comprises a plurality of tubular elements in reciprocal fluid communication, a respective piping being keyable onto each of the tubular elements, each tubular element preferably being identical to the first or second tubular element.

In an aspect, the fitting has a linear conformation and the first tubular element has a longitudinal development coinciding with the longitudinal development axis of the second tubular element.

In an aspect the fitting has an angular conformation, i.e. the respective longitudinal development axes of the first and the second tubular elements form between them an angle that is not 180°, for example 45° or 90°.

In an aspect the fitting has a T shape and comprises three tubular elements of which two external tubular elements, aligned to one another, and a third intermediate tubular element interposed between the two external tubular elements and perpendicular thereto.

In an aspect the sleeve is configured to be blocked by pliers having a pinching profile of type B or type F or type H or type TH or type U.

In an aspect the present invention relates to a plant comprising at least a fitting according to one or more of the aspects and/or the claims and at least a pipe connected to the at least a fitting.

In an independent aspect the present invention relates to a production method of a fitting for connecting pipes, in particular flexible pipes, the method comprising steps of:
- predisposing at least a first tubular element provided, at an end thereof, with a first inlet/outlet opening and defining internally thereof a first conduit;
- predisposing at least a second tubular element provided, at an end thereof, with a second inlet/outlet opening and defining internally thereof a second conduit;
the first and second conduit being connected to one another, at respective opposite ends, to the respective inlet/outlet opening, such that the first and second conduit are in communication with one another and overall define an assembled conduit of the fitting that sets the first opening and the second opening in fluid communication,
- predisposing a sleeve having a hollow cylindrical conformation and exhibiting a longitudinal axis of development;
- realising, on an external surface of the sleeve, at least an annular protrusion extending from the external surface;
- realising, on an internal surface of the sleeve, at the annular protrusion, at least an annular gully having a determined depth;
- predisposing a blocking ring, preferably having a thickness that is substantially equal to said determined depth of the annular gully;
- housing the blocking ring in the annular gully of the sleeve;
- mounting the sleeve to the first tubular element in such a way as to surround it externally and to create, between the internal surface of the sleeve and the first tubular element, an annular housing destined to insertingly receive a pipe, the pipe being interposed between the first tubular element and the sleeve.

In an aspect, the steps of realising, on an external surface of the sleeve, at least an annular protrusion and realising, on an internal surface of the sleeve, at least an annular gully, are performed contemporaneously by means of a single operation of plastic deformation of the sleeve. The plastic deformation of the sleeve are preferably obtained by means of a moulding and/or forming and/or mechanical working operation.

In other words, the annular protrusion and the annular gully are realised in a single action, i.e. the creation of the annular gully on the internal surface of the sleeve determines the creation of the annular protrusion on the external surface of the sleeve.

In an aspect the step of predisposing a blocking ring comprises at least a step of realising a closed blocking ring, having a toroidal conformation, and optionally an additional step of cutting the ring such as to interrupt the circumferential continuity of the ring. In an aspect the additional step of cutting the ring includes make a cut parallel to a central axis of the ring.

In an aspect the step of housing the blocking ring in the annular gully of the sleeve occurs before or after the step of mounting the sleeve to the first tubular element.

In an aspect the method comprises, preferably prior to the step of mounting the sleeve on the tubular element, a step of predisposing at least a sealing element, preferably two sealing elements, and enveloping it externally of the first tubular element in such a way that the sealing element is interposed between the first tubular element and a pipe inserted in the annular housing, the sealing element being preferably a seal or an O-ring.

In an aspect, the steps of realising, on an external surface of the sleeve, at least an annular protrusion, and realising on an internal surface of the sleeve at least an annular gully are carried out on a same portion of the sleeve, along the longitudinal axis of development, and/or such that the annular protrusion and the annular gully are at the position occupied by the at least a sealing element on the tubular element.

In an aspect the method comprises, previously to the step of mounting the sleeve to the first tubular element, a step of predisposing a sleeve-holder removably associated to a mounting portion of the first tubular element, the sleeve-holder being configured such as to receive the sleeve and mount it on the first tubular element such that the sleeve stably envelops the first tubular element and defines the annular housing.

In an aspect the method comprises the step of inserting, in the annular housing, an end of a pipe to be connected to the fitting, such that the pipe is splined on the first tubular element and partially envelops the sleeve.

In an aspect, the method comprises a step of exerting on the external surface of the sleeve, preferably by means of a clamping profile of a blocking pliers, a blocking force able to radially define, preferably plastically, the sleeve nearingly to the first tubular element, such as to compress the pipe between the sleeve and the first tubular element internally of the annular housing and stably and fluid-sealingly block the pipe in the annular housing.

In an aspect, during the step of exerting a blocking force on the external surface of the sleeve, the at least a seal element deforms such as to inhibit a fluid communication between the first conduit and the external surface of the first tubular element.

In an aspect the method comprises steps of:
- predisposing a further sleeve having a hollow cylindrical conformation and exhibiting a longitudinal axis of development;
- realising, on an external surface of the further sleeve, at least an annular protrusion extending from the external surface;
- realising, on an internal surface of the sleeve, at the annular protrusion, at least an annular gully having a determined depth;
- predisposing a further blocking ring, preferably having a thickness that is substantially equal to said determined depth of the annular gully;
- housing the further blocking ring in the annular gully of the further sleeve;
- mounting the further sleeve to the first tubular element in such a way as to surround it externally and to create, between the internal surface of the further sleeve and the second tubular element, an annular housing destined to insertingly receive a further pipe, the further pipe being interposed between the second tubular element and the further sleeve.

In a further aspect, the method comprises a step of predisposing, on the first and/or second tubular element, connecting means to a fluid source, for example a conduit, a tap or a tank, the connecting means comprising a threaded portion destined to connect to a corresponding counter-thread of the fluid source such as to set the tubular element in fluid communication with the fluid source.

The Applicant considers that the combination of the above technical characteristics leads to obtaining numerous advantages.

Firstly, the described fitting effectively carries out the function for which it was developed, i.e. signaling (with a fluid loss) a missed blocking of the connection on the pipe and realizing an excellent fluid seat when blocked.

Further, the described fitting, and the relative manufacturing method, obviate the drawbacks described for the known solutions, in particular the solution with special seals and the solution described in patent EP 1 653 142. On the one hand the invention does not require the use of special seals (not always reliable) and is not limited to determined dimensions of the fitting, and on the other hand it does not require the use of a structurally complex sleeve.

Overall, the described fitting is realizable at a modest cost, with respect to known fittings, for example thanks to the possibility of realizing the annular protrusion and the annular gully by means of a single deformation operation and adding the blocking ring, which has a unit cost (lined to the material of which it is made and the working operations for realizing it) that is extremely modest and substantially non-influential on the total cost of the fitting.

Further, the fitting of the present invention is usable with a plurality of blocking pliers, as will clearly emerge from the following part of the description. This flexibility is crucial for the object of the present invention, as a vital element regarding each pipe fitting is the fact that it has to be used with a conventional-type pliers that does not require a new-profile type of blocking clamp in order to be pinched. This is because blocking pliers are devices responding to determined manufacturing standards (a very limited number of types exists). The pliers are expensive and widely used in the hydraulic sector; in substance, each operator possesses at least one and uses it with a multiplicity of fittings and installations. Each fitting has to guarantee compatibility with at least one of the pliers: if the fitting of the present invention required a new set of pliers, it would be difficult to place it on the market for fittings. For this reason the present fitting has been developed taking into account the defined standards for some blocking pliers, to which it responds.

Further characteristics and advantages will more fully emerge from the detailed description of some embodiments, among which also a preferred embodiment, by way of non-limiting examples, of a fitting for the connecting of pipes according to the present invention. This description will now be made with reference to the accompanying drawings, provided purely by way of non-limiting example, in which:
- figure 1 is a section view of a possible embodiment of a fitting for connecting pipes, in particular of at least a flexible pipe, according to the present invention;
- figure 2 is a section view, exploded, of the fitting of figure 1;
- figure 3 is a section view of the fitting of figure 1, in which a flexible pipe is inserted;
- figure 4 is a perspective view of the fitting, and the relative flexible pipe, of figure 3, and further shows an open blocking pliers in the step of nearing to the fitting to perform the blocking thereof;
- figure 5 is a fitting according to the present invention, blocked on a multi-layer pipe; also visible is the blocking pliers in the operating condition, i.e. closed on the blocking means of the fitting;
- figure 6 is a section view of the fitting of figure 5 and the pipe mounted thereto, on termination of the blocking operations;
- figure 6a is a larger-scale view of a portion of the view of figure 6;
- figure 7 is a perspective view of the fitting of figure 5;
- figure 8 shows the fitting of figure 1 with the addition of indications of the measurements of some components;
- figure 9 is a larger-scale view of a portion of figure 8, with the addition of further measurements;
- figure 10 shows a possible embodiment of the blocking means of the fitting of the present invention. With reference to the figures of the drawings, a fitting for connecting pipes T is denoted in its entirety, in particular for connecting flexible pipes, according to the present invention.

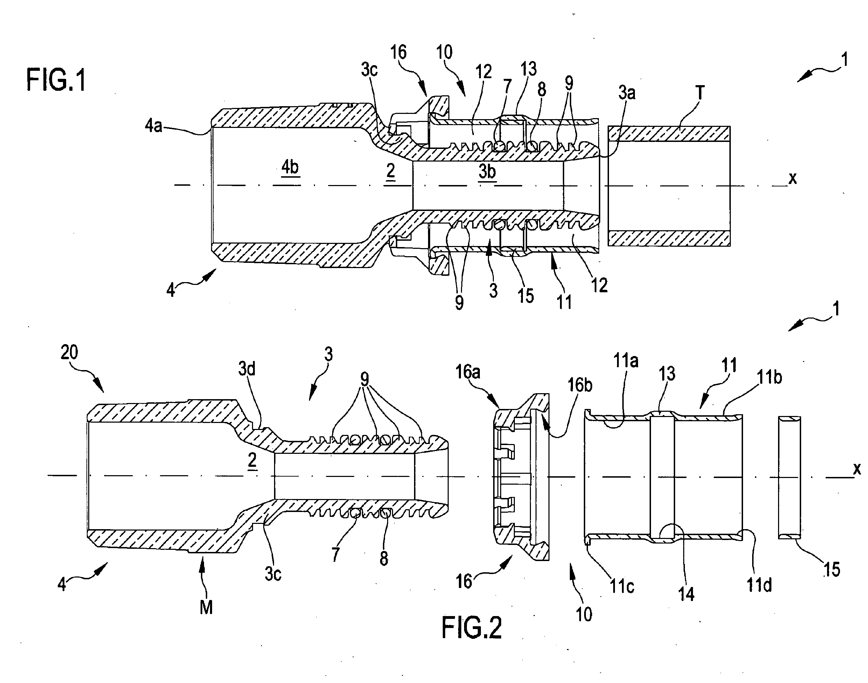

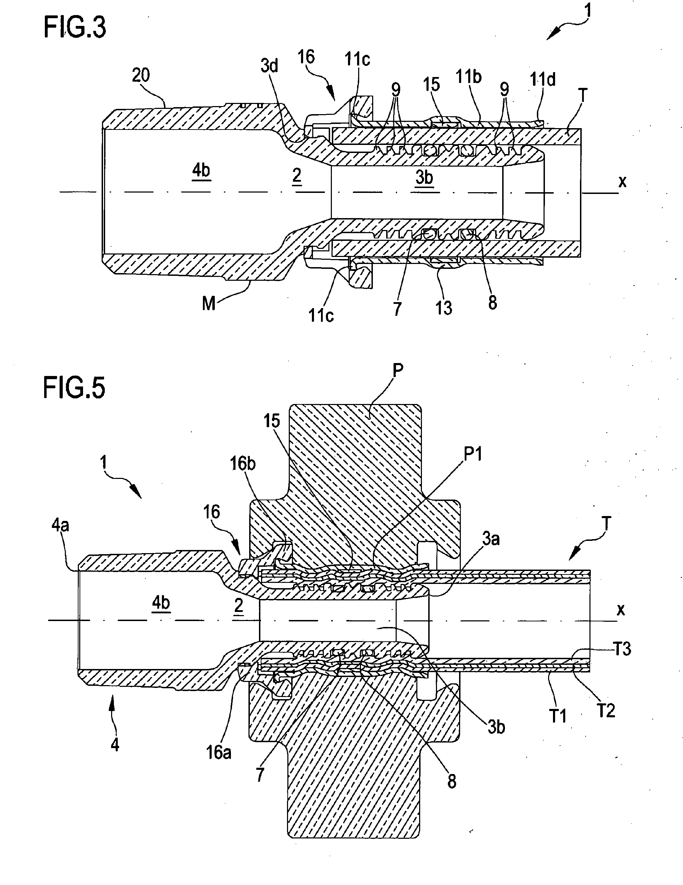

The fitting 1 is used for reciprocally connecting pipes T used for transporting pressurised fluid. The pipes T can be of the type made of a single material (for example rubber or plastic), as shown in figures 1, 3 and 4, or of the "multilayer" type. Multilayer pipes T are, for example, pips containing superposed layers of different materials in which, in the specific case, one or more of the layers is made of a metal material. For example, as shown by way of example in figures 5, 6 and 7, the multilayer comprises three superposed layers T1, T2 and T3 (preferably glued to one another by means of intermediate adhesive layers); the external layers T1 and T3 are preferably made of plastic and the intermediate layer (T2 is made of metal material (for example aluminium).

With reference to the embodiment, by way of non-exclusive example, shown in the figures, the fitting 1 comprises a first tubular element (or terminal) 3 and a second tubular element 4 respective provided with a first3a and a second inlet/outlet opening 4a and defining, internally thereof, respectively a first 3b and a second conduit 4b. The two tubular elements are connected to one another at respective opposite ends to the respective inlet/outlet opening, such that the first 3b and the second conduit 4b are in communication with one another and overall define an assembly conduit 2, which puts the first 3a and the second opening 4a in fluid communication with one another.

The fitting 1 is further provided at least with first blocking means 10 comprising a sleeve 11 and a blocking ring 15. The sleeve 11 is associable, preferably removably, to the first tubular element 3 in such a way as to surround it externally and create, between the sleeve 11 and the first tubular element, an annular housing 12 destined to insertingly receive a pipe T; once the insertion has taken place the pipe is interposed between the first tubular element and the sleeve. The sleeve has an internal surface 11a, facing towards the first tubular element 3, and an external surface 11b; it is further provided with at least an annular protrusion 13, which extends from the external surface, and at least an annular gully 14 fashioned in the internal surface at the annular protrusion 13. The blocking ring 15 is housable in the annular gully 14.

The first blocking means 10 are configured to operate in an inserting configuration, in which they enable insertion of the pipe T in the annular housing 12, and in a blocked configuration, in which they stably and fluid-sealingly block the pipe in the annular housing.

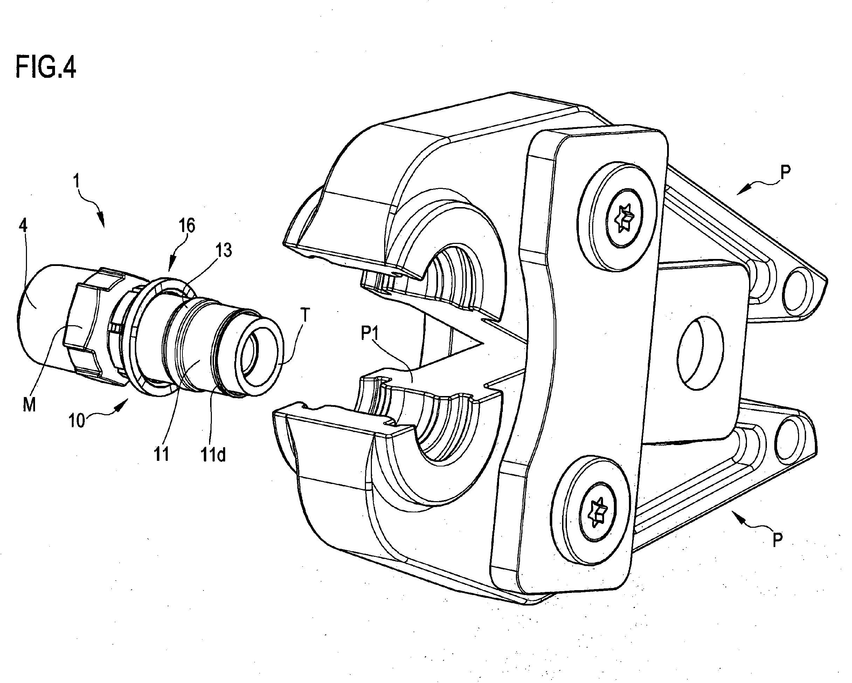

In more detail, the passage of the first blocking means 10 from the insertion configuration to the blocking configuration occurs by means of a radial deformation of the sleeve 11, nearingly to the first tubular element 3, such as to compress the pipe T between the sleeve and the first tubular element internally of the annular housing. This deformation is realized by acting on the external surface 11b of the sleeve with a clamping profile P1 of a clamping pliers P (visible in figures 4 and 5), able to plastically deform the sleeve. In other words, the passage of the blocking means into the blocking configuration determines a reduction of the radial extension of the annular housing 12, caused by the nearing of the sleeve 11 to the first tubular element 3, and a consequent compression of the pipe T internally of the annular housing.

In the embodiment shown in the figures, the blocking means 10 are illustrated with reference to the first tubular element (or terminal) 3. The blocking means may of course be replicated for the second tubular element (or terminal) 4 (for blocking the respective pipe) and possible for further tubular elements of the fitting.

The first tubular element 3 and the sleeve 11 preferably have a hollow cylindrical conformation and exhibit a same longitudinal development axis X.

As visible in particular in figures 1, 3, 8, 9 and 10, the blocking ring 15 is housed in the annular gully 14 of the sleeve 11 in such a way as to be substantially flush with the internal surface 11a of the sleeve, i.e. to realize an internal surface 11 of the sleeve that is substantially cylindrical. In other words the diameter of the internal surface of the sleeve (housing the ring 15) is constant along the whole development of the sleeve along the longitudinal development axis X.

In a preferred embodiment, the annular protrusion 13 and the annular gully 14 are made in a same position of the sleeve 11 along the longitudinal development axis X. The correspondence between the protrusion and the gully (respectively externally and internally of the sleeve) is linked both to the correct functioning of the blocking means (as it is the protrusion which presses on the underlying ring, the ring having to be aligned therewith) and to the manufacturing process of the sleeve (which advantageously occurs by means of a single deformation which creates the annular protrusion and gully).

The annular protrusion 13 and the annular gully 14 are substantially complementary, one being the "negative" of the other; the thickness (or external volume) of the protrusion, calculated as the distance from the external surface 11b of the sleeve, substantially corresponds to the depth of the gully 14; in other words, the addition of material on the external surface of the sleeve corresponds to the lack of material on the internal surface.

The first tubular element 3 comprises at least a first seal element 7, externally enveloped on the tubular element such as to be interposed between it and a pipe T inserted in the annular housing 12. The first seal element 7 is able to deform, when the first blocking means 10 are in the blocked configuration, in order to inhibit a fluid communication between the first conduit 3b and an external surface of the first tubular element 3. The seal element 7 is elastic; in particular, it is a seal having an appropriately shaped section.

The annular protrusion 13 and the annular gully 14 are preferably realised in a position of the sleeve 11, along the longitudinal development axis X, at the position occupied by the first seal element on the tubular element; in other words, the annular protrusion and the annular gully are aligned along a perpendicular plane to the longitudinal development axis X. The sleeve 11 preferably has a thickness, calculated as the distance between the internal surface 11a and the external surface 11b, that is substantially uniform over the whole longitudinal development thereof.

When the first blocking means 10 are in the blocked configuration, the deforming thrust of the sleeve 11 preferably determines a radial nearing to the first tubular element 3 by the annular protrusion 13 and the blocking ring 15, housed in the annular gully 14; this thrust transmits through the blocking ring 15 to the underlying portion of pipe T at the first seal element 7, determining a deformation of the first seal element 7 and a sealed blocking of the pipe on the first tubular element.

The blocking ring 15 can be a closed ring, with a toroidal conformation, or, alternatively, a ring provided with a cut. By way of example, the cut of the ring is parallel to a central axis of the ring. The blocking ring is preferably made of rubber or a plastic material.

The blocking ring 15 preferably has an external diameter that substantially corresponds to the diameter of the bottom of the annular ring 14, such that when it is inserted therein it is maintained stably internally of the gully by effect of the snug interference with the lateral walls of the gully. In substance, the ring 15 has a diameter that is such as to precisely occupy the annular gully 14 without accidentally exiting therefrom. During the assembly step, the blocking ring is deformed such as to be insertable internally of the sleeve, and when it reaches the annular gully it is free to return to the initial shape thereof and thus occupy the annular gully. Additionally, or alternatively, the blocking ring is maintained in the annular gully by gluing.

When the blocking ring comprises a cut making it discontinuous along the circumferential development thereof, it preferably has an elasticity that is such as to determine, when it is flexed by nearing or distancing the ends at the cut position, the development of an elastic force tending to return it into a rest configuration. This elasticity enables easy mounting of the ring: in fact it is deformed during the insertion in the sleeve and, on reaching the annular gully, the elasticity reopens it so that it occupies the gully; this elasticity further maintains it stably in contact with the bottom surface of the annular gully without any need to perform other operations.

The presence of the cut in the ring does not influence the correct functioning of the blocking means, as the discontinuity introduced by the cut is a minimum part of the whole ring and what is more the cut tends to close when the ring is inserted in the gully, with the result that the two edges of the ring (created with the cut) tend to return into contact with one another, thus re-establishing the circumferential continuity of the ring 15.

The blocking ring preferably has a radial thickness (calculated as the difference between the external diameter thereof and the internal diameter thereof) comprised between 0.3mm and 3mm or comprised between 0.8mm and 1.6mm, preferably about 1.2mm.

As can be seen in the figures, the first tubular element 3 comprises a plurality of ribs 9 extending externally of the tubular element and having a substantially annular profile; the ribs define a plurality of grips for the pipe when the first blocking means are in the blocking configuration. In greater detail, the ribs 9 extend radially from the external surface of the first tubular element over a rib diameter that is greater than an external diameter of the first tubular element 3.

As illustrated in particular in figures 1, 2, 3, 8 and 9, the first sealing element 7 is enveloped externally of the first tubular element, between two adjacent ribs, such as to be comprised radially within the rib diameter or such as to be substantially flush with the development of the ribs 9.

The first sealing element 7 is positioned between two adjacent ribs 9 so as not to interfere with a pipe T inserted in the annular housing 12 and such that (as previously illustrated) it does not realise a fluid seal between the first tubular element 3 and the pipe T when the first gripping means 10 are in the insertion configuration (with the aim of being able to detect a missed blocking of the fitting). On the contrary, when the first blocking means are in the blocked configuration, the combined action of the plurality of ribs 9 and the radial compression of the sleeve 11 towards the first tubular element 3 prevents de-insertion of the pipe T from the annular housing 12.

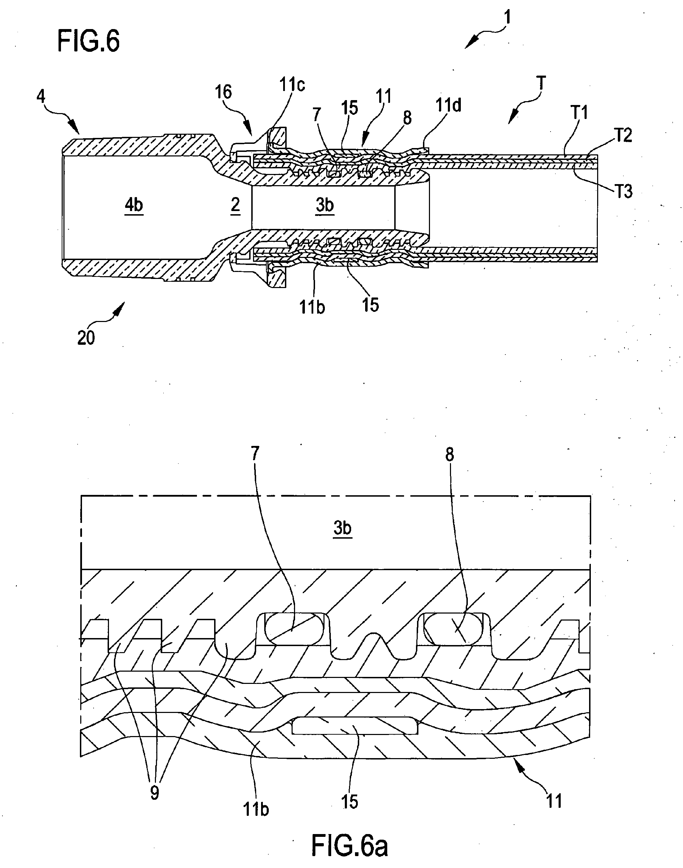

When the first gripping means 10 are in the blocking configuration and the sleeve 11 is deformed towards the first tubular element 3, the compression of the pipe T on the plurality of ribs 9 advantageously determines a deformation of the pipe by action of the plurality of fibs (clearly visible in figures 5, 6 and 6a) with a consequent jointing of the pipe on the ribs.

The blocking ring 15 preferably has a width, measured parallel to the longitudinal development axis X, comprised between 2mm and 4mm or comprised between 2.5mm and 3.5mm or comprised between 2.8mm and 3.2mm, preferably about 3mm.

The annular gully 14 preferably has a respective width, measured parallel to the longitudinal development axis X, comprised between 2mm and 6mm or comprised between 3mm and 5mm, preferably about 4mm. In this way the annular gully might not be completely filled between the two lateral walls thereof by the blocking ring, but instead can maintain, on one or both sides of the blocking ring, a free space (see figures 1, 3, 8, 9, 10). This space can be filled by the blocking ring when, by effect of the passage of the blocking means into the blocked configuration (i.e. the deformation of the sleeve), the ring undergoes a deformation by crushing that extends the width thereof; this crushing of the seal ring (and the relative axial "filling" of the annular gully) is shown in figures 6 and 6a.

As shown in the embodiment of the figures, the first tubular element 3 preferably comprises a second sealing element 8, substantially identical to the first sealing element 7, wound externally of the first tubular element in a different position along the longitudinal development axis X. The first and the second seal element preferably have a toroidal shape, and are both preferably 0-rings, widely known and used in the sector.

The presence of two sealing elements increases the seal of the fitting, the effectiveness of the blocking and the duration thereof over time.

The annular protrusion 13 and the annular gully 14 of the sleeve are preferably realised in a position of the sleeve 11 along the longitudinal development axis X, intermediate with respect to the positions occupied by the first and the second sealing element on the tubular element, such that when the first blocking means are in the blocked configuration, the thrust of the blocking ring 15 on the underlying portion of pipe T determines a deformation of the first 7 and the second sealing element 8 and a sealed blocking of the pipe on the first tubular element.

The annular gully and the blocking ring cannot extend indefinitely in width, between the longitudinal ends of the sleeve, although preferably they are maintained within a width limit fixable at about 10mm, in general, the annular gully occupies a substantially median position along the development of the sleeve with respect to the longitudinal axis X. The annular gully is preferably straddling one or both the sealing elements, as shown by way of example in figures 1, 3, 8 and 9. In substance, the annular gully 14 interests the overlying zone comprised between the two sealing elements 7 and 8, extending limitedly externally of the elements. This is because the pressure exerted during the blocking by the blocking ring is indicated (and especially designed) to interact with the sealing elements (by pressing and deforming them) and the portions adjacent thereto, but it is not recommended for compressing portions of pipes exclusively overlying one or more ribs. In fact the pressure on parts that are distant from the sealing elements can cause excessive stress on the pipe, which can burst or be cut by effect of the shear counter-thrust exerted by the ribs. A further positioning constraint (preferably median) of the annular gully is due to the fact that the fitting has to be blockable using conventional pliers; it is necessary to avoid both the protrusion from being involved by the clamping profile P1 (in which case the sealing ring would be pushed insufficiently in a radial sense) and the protrusion from being excessively pressed by the profile P1 (in which case the pipe might excessively deform and break).

The first tubular element 3 preferably exhibits, at the opposite end to the first inlet/outlet opening 3a, an abutting element 3c which extends distancingly from the external surface of the first tubular element and is able to define an abutting surface for a pipe T splined on the tubular element. The abutting element has a radial dimension that is greater than the external surface of the first tubular element, measured distancingly from the longitudinal development axis X.

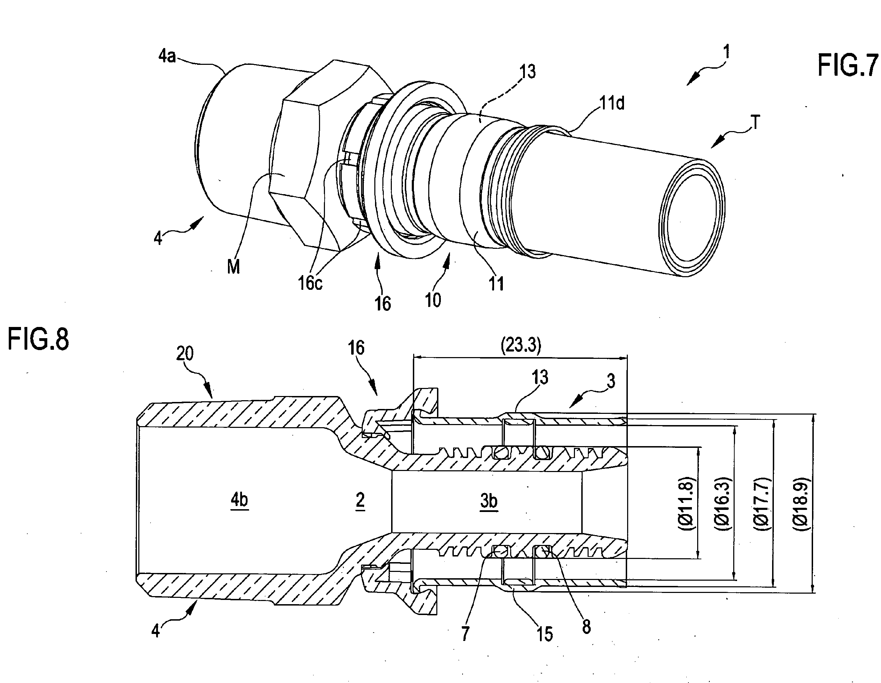

The first tubular element 3 preferably comprises an assembly portion 3d and the first blocking means 10 comprise a sleeve-bearing element 16 (preferably distinct from the sleeve (11) removably associable to the assembly portion; this sleeve-bearing element is configured to assembly the sleeve 11 to the first tubular element 3 in such a way that the sleeve stably surrounds the first tubular element and defines the annular housing 12. The sleeve-bearing element 16 preferably has an annular conformation and, when associated to the assembly portion, exhibits a central axis coinciding with the longitudinal development axis X. The sleeve-bearing element preferably extends along the central axis between a first annular engaging end 16a to the assembly portion of the first tubular element and a second annular engaging end 16b able to receive the sleeve. The assembly portion 3d of the first tubular element is preferably positioned at the abutting element 3c and consists of an annular gully (see figures 2 and 8). The assembly of the sleeve (associated to the sleeve-bearing element) to the tubular element3 preferably occurs with a press-fit by insertion of the first annular engaging end 16a into the gully defining the assembly portion 3d.

The sleeve extends, along the longitudinal development axis X, between a first end 11c, destined to be mounted to the first tubular element 3, and a second end 11 d, opposite the first end, free and defining an opening for insertion of the pipe T in the annular housing.

The first end of the sleeve is preferably associable to the sleeve-bearing element 16, in particular the second annular engaging end 16b. The second end 11d preferably comprises a lead-in (for example a flaring towards the outside) to facilitate the insertion of the end of the pipe to be connected.

The sleeve-bearing element preferably comprises one or more openings 16c fashioned in one or more circumferential positions of the sleeve-bearing element and passing between the outside and inside of the sleeve-bearing element; these openings (overall defining a window-type hatch about the sleeve-bearing element) enable the observation (from outside the sleeve) of the pipe T inserted in the housing 12 with the aim of verifying the correct positioning of the pipe before proceeding to the blocking thereof in the fitting.

The fitting 1 can comprise second blocking means, for example identical to the first blocking means 10 and destined to cooperate with a second tubular element in order to block a further pipe T. In this case the second blocking means comprise a respective sleeve (with annular protrusion and gully) and a respective blocking ring.

Alternatively, as shown in the embodiment of the figures, the second tubular element 4 of the fitting 1 comprises (in the place of second blocking means) connecting means 20 to a fluid source, for example a conduit, a tap or a tank (not shown and of known type). The connecting means preferably comprise a threaded portion destined to connect to a corresponding counter-thread of the fluid source such as to set the second tubular element 4 in fluid communication with the fluid source. The connecting means 20 preferably comprise a manoeuvring portion M engageable by a screwing tool. The manoeuvring portion M is generally a hexagonal projection, having a radial dimension that is greater than a the tubular element and able to be manoeuvred with a wrench to realize a sufficiently tight fastening of the device to the fluid source. The manoeuvring portion M is preferably realized on the abutting element 3c, such as to define a grip of the fitting 1 and at the same time be engaged to a screwing tool 1.

In a possible embodiment of the invention (not shown) the fitting preferably comprises a plurality of tubular elements in fluid communication with one another, a respective pipe being splinable on each of the tubular element, each tubular element being preferably identical to the first or second tubular element.

The first 3 and/or the second tubular element 4 are preferably made of metal, preferably brass (for example yellow brass CW602N) or steel, or of plastic material (for example technopolymer PPSU).

The sleeve 11 is made of a metal material, preferably steel (for example stainless steel AISI 304). The blocking ring 15 is preferably made of plastic or rubber or metal. The sealing elements 7 and 8 are preferably made of rubber (for example synthetic rubber EPDM - *Ethylene-Propylene Diene Monomer*)*.* The pipe T is preferably made of plastic or, alternatively it is a multilayer pipe comprising an external layer T1 made of plastic, an intermediate layer T2 made of metal and an internal layer T3 made of plastic.

The fitting of the present invention conforms to standards for use with potable water. By way of example, the maximum working temperature can be 120°C in continuous functioning and the maximum working pressure is 10 bar.

The embodiment shown in the figures illustrates a fitting having a linear conformation, in which the first and the second tubular element have the respective longitudinal extension axes coinciding with one another. However the fitting of the present invention can have an angular conformation, i.e. the respective longitudinal development axes of the first and the second tubular element form, with one another, an angle which is not 180°, for example 45° or 90°. The angle between the tubular elements does not influence the technical characteristics described, nor the functioning of the fitting, although it enables arranging the different fittings usable in a plant in accordance with the angle between the pipes to be connected.

The fitting can also have a T conformation and comprise three tubular elements of which two external tubular elements aligned to one another and third intermediate tubular element interposed between the two external tubular elements and perpendicular thereto.

The sleeve 11 of the present invention is configured to be blocked by means of pliers having a clamping profile of type B or type F or type H or type TH or type U, with reference to clamping standards of known type in the hydraulic sector. This means that the position of the annular protrusion 13 and the annular gully 14 are such as to enable a correct blocking with each of the pliers (with clear advantages in terms of possibility of use of the fitting). In substance, the sleeve is conformed such that with each of the pliers the deformation of the blocking means is of the correct entity, i.e. neither insufficient (in which case there would be seal problems) nor excessive (in which case the pipe might be damaged).

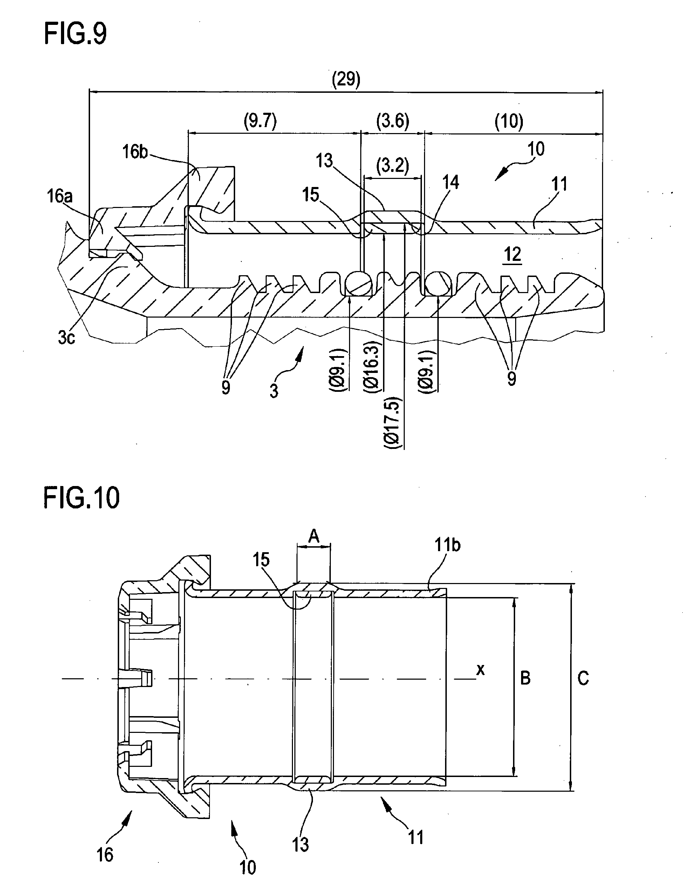

Figures 8 and 9 illustrate a series of sizes, by way of example, for the fitting of the present invention.

The dimensions are for a fitting structured to house a pipe T having a determined diameter. It is obviously possible to realize fittings for pipes of each diameter, by appropriately proportioning the dimensions of the single components (for example proportioning the dimensions shown in the figures. Figure 10 in particular illustrates the first blocking means 10. The dimension denoted by letter A indicates the width of the seal ring, the size denoted by letter B indicates the internal diameter of the sleeve and the size denoted by letter C indicates the external diameter of the sleeve (calculated as the radial dimension of the protrusion 13).

The following table reports, by way of example, constructional values for sizes A, B and C for some fittings of different dimensions (further diameters might be included):

| Pipe measurement | A | B | C |
|---|---|---|---|
| 16/2 | 3 | Ø16.3 | Ø18.9 |
| 20/2 | 3 | Ø20.3 | Ø22.9 |
| 26/3 | 3 | Ø26.3 | Ø28.9 |
| 32/3 | 3 | Ø32.3 | Ø35.1 |

The described fitting can be subjected to variants and modifications, all falling within the protective scope of the present invention. For example, several annular protrusions can be included (for example two or three) in distinct positions of the sleeve and corresponding annular gullies with blocking rings.

The production method of a fitting according to the present invention comprises steps of:
- predisposing the first and second tubular element as described above;
- predisposing a sleeve having a hollow cylindrical conformation and exhibiting a longitudinal development axis;
- realising the annular protrusion on the external surface of the sleeve;
- realising the annular protrusion on the internal surface of the sleeve;
- predisposing the blocking ring and housing it in the annular gully;
- assembling the sleeve on the first tubular element such as to surround it externally and creating the annular housing destined to receive a pipe by insertion.

The step of realising the annular protrusion and realising the annular gully are advantageously carried out contemporaneously by means of a single plastic deforming operation of the sleeve. The step of predisposing the blocking ring preferably includes realizing a closed blocking ring having a toroidal conformation (typically in the case of a rubber blocking ring), or realizing a closed ring and thus cut the ring (preferably in the case of a plastic blocking ring).

In use, the first tubular element 3 is predisposed with the first sealing element 7 and possibly the second sealing element 8 located in the respective seatings between two adjacent ribs. Thereafter, the tubular element 3 is inserted internally of the terminal section of a pipe T, such that the ribs 9 can act on the pipe and retain it couplingly with the tubular element and the sleeve externally envelops the terminal section of the pipe.

Thereafter, for example by means of a pliers P, provided with a clamping profile P1, compression actions are generated on the sleeve 10 at one or more portions of the sleeve, which undergo a permanent deformation which crushes the pipe T on the underlying tubular element 3, and consequently generates a compression on the interposed sealing element 7 which maintains it in the deformed position. The same occurs for the second sealing element 8.

Note that the pipe obviously undergoes a deformation, preferably permanent (in particular in the case of a multilayer pipe).

Note further (figures 6 and 7) that the effective action of the pliers P, pressing on the outside of the sleeve 11, determines a "flattening" of the protrusion 13. In substance the protrusion 13 has been radially deformed towards the inside of the tubular element and this has the effect of correspondingly thrusting on the sealing ring 15 and on the underlying pipe T (as well as on the sealing elements 7 and 8). This result is clearly visible in figure 6a.

In the described fitting, the presence of the sleeve in the annular protrusion and the underlying blocking ring enables locally availing of a surplus of material for pressing the underlying sealing element; this increase in material is necessary for operating with seals which do not project from the ribs (and which thus enable detection of the missed blocking of the fitting); without the blocking ring the drawback of the prior art would result, as there would be a "gap" at the position of the protrusion on the internal side of the sleeve, which would prevent transfer of the thrust from the pipe to the underlying sealing element, with a consequent poor seal even with the fitting tightly fastened.

In the present invention the sleeve has been acted on by modifying the structure thereof, without any need for modifications to the clamping profile of the pliers. In particular, at the productive level, a "classic" sleeve can be taken (i.e. of known type, meaning smooth and uniformly cylindrical on both internal and external sides) and modified by plastically deforming it such as to create the annular gully (a space) internally thereof and the corresponding annular protrusion externally thereof; then the sealing ring is inserted into the gully with the function of a washer (or filling material).

It is further possible, with a consequent reduction in costs, to use seals (for example 0-rings) of entirely conventional type, simply by selecting them with a diameter of less than the diameter of the ribs.

The use of conventional 0-rings (i.e. with a constant section) has the further advantage given the fact that no intrinsic structural pre-weakening is performed on the seals, which are dimensioned optimally and therefore exhibit optimum resistance and elasticity characteristics, as they do not exhibit any yielding or pre-weakened points. It follows that due to the absence of pre-weakening points in the seals, the fitting exhibits a working duration that is greater with respect to the seals of the prior art described above, and in particular enables guaranteeing a fluid seal for a longer time, including following stressful thermal and pressure cycles to which fluid plants are normally subject.

## Claims

1. A fitting (1) for connecting pipes (T), in particular at least a pipe of the pipes being flexible, comprising:
- at least a first tubular element (3) provided, at an end thereof, with a first inlet/outlet opening (3a) and defining internally 5 thereof a first conduit (3b);
- at least a second tubular element (4) provided, at an end thereof, with a second inlet/outlet opening (4a) and defining internally thereof a second conduit (4b),
said first tubular element (3) and second tubular element (4) being connected with one another, at respective ends opposite to the respective inlet/outlet opening, such that said first conduit (3b) and second conduit are in communication with one another and overall define an assembly conduit (2), putting said first opening (3a) and said second opening (4a) in fluid communication,
the fitting further comprising at least first blocking means (10) comprising:
- a sleeve (11) associable to the first tubular element (3) such as to surround the first tubular element (3) externally and to create, between the sleeve (11) and the first tubular element (3), an annular housing (12) destined to insertingly receive a pipe (T), the pipe (T) being interposed between the first tubular element and the sleeve, said sleeve having an internal surface (11a), facing towards the first tubular element (3), and an external surface (11b), and being provided with at least an annular protrusion (13) extending from said external surface and with at least an annular gully (14) afforded in said internal surface at said annular protrusion (13);
- at least a blocking ring (15) housable in said at least an annular gully (14) of said sleeve (11);
said first blocking means (10) being configured for operating at least in an insertion configuration, in which they enable insertion of a pipe (T) into said annular housing (12), and a blocked configuration, in which they stably and fluid-sealingly block the pipe in the annular housing, **characterized in that** the first tubular element (3) comprises at least a first sealing element (7), externally enveloping the tubular element in such a way as to be interposed between the tubular element and a pipe (T) inserted in said annular housing (12), said first sealing element (7) being deformable, when the first blocking means (10) are in the blocking configuration, such as to inhibit a fluid communication between the first conduit (3b) and an external surface of the first tubular element.

2. The fitting (1) of the preceding claim, wherein the passage of the first blocking means (10) from the insertion configuration to the blocking configuration occurs by means of a radial deformation of the sleeve (11), nearingly to the first tubular element (3), such as to compress the pipe (T) between the sleeve (11) and the first tubular element (3) internally of the annular housing (12), the deformation being realised by acting on the external surface (11b) of the sleeve with a clamping profile (P1) of a blocking pliers (P), able to plastically deform the sleeve, and/or wherein the passage of the blocking means (10) into the blocking configuration determines a reduction of the radial extension of the annular housing (12), caused by a nearing of the sleeve (11) to the first tubular element (3), and a consequent compression of the pipe (T) internally of the annular housing.

3. The fitting (1) of claim 1 or 2, wherein the first tubular element (3) and the sleeve (11) have a hollow cylindrical conformation and have a same longitudinal 10 development axis (X), and/or wherein said blocking ring (15) is housed in said annular gully (14) of the sleeve (11) in such a way as to be substantially flush with the internal surface (11a) of the sleeve and/or such as to realise an internal surface (11a) of the sleeve that is substantially cylindrical and/or has a constant diameter along the whole development of the sleeve along the longitudinal development axis (X).

4. The fitting (1) of any one of the preceding claims, wherein said annular protrusion (13) and said annular gully (14) are realised substantially in a same position of the sleeve (11) along the longitudinal development axis (X).

5. The fitting (1) of any one of the preceding claims, wherein said annular protrusion (13) and said annular gully (14) are realised in a position of the sleeve (11), along said longitudinal axis development (X), that is close to, or at, the position occupied by the first sealing element (7) on the tubular element (3), or the annular protrusion and the annular gully are substantially aligned along a plane that is perpendicular to the longitudinal development axis.

6. The fitting (1) of any one of the preceding claims, wherein the first tubular 30 element comprises a second sealing element (8), substantially identical to the first sealing element, enveloped externally of the first tubular element in a different position along the longitudinal development axis.

7. The fitting (1) of any one of the preceding claims, wherein the sleeve has a thickness, calculated as the distance between the internal surface and the external surface, that is substantially uniform over a whole longitudinal development thereof, and/or wherein the blocking ring is a closed ring, having a toroidal conformation, or, alternatively, it is a ring provided with a cut.

8. The fitting (1) of any one of the preceding claims, wherein the first tubular element comprises a plurality of ribs (9), extending externally of the tubular element and having a substantially annular profile, the ribs defining a plurality of grips for the pipe when the first blocking means are in the blocking configuration, and/or wherein the ribs extend radially from the external surface of the first tubular element over a rib diameter that is greater than an external diameter of the first tubular element.

9. The fitting (1) of the preceding claim, wherein the first sealing element is enveloped externally of the first tubular element, between two adjacent ribs of the plurality of ribs, such as to be comprised radially within the rib diameter or such as to be substantially flush with the development of the ribs, and/or wherein the first sealing element is positioned between two adjacent ribs such as not to interfere with a pipe inserted in the annular housing and such as not to realise a fluid seal between the first tubular element and the pipe when the first blocking means are in the inserting configuration.

10. The fitting (1) of any one of the preceding claims, further comprising second blocking means including:
- a respective sleeve associated to the second tubular element in such a way as to surround it externally and to create, between the sleeve and the second tubular element, a respective annular housing destined to insertingly receive a pipe, the pipe being interposed between the second tubular element and the sleeve, said respective sleeve having an internal surface, facing towards the second tubular element, and an external surface, and being provided with at least an annular protrusion extending from the external surface and at least an annular gully fashioned in the internal surface at the annular protrusion;
- a respective blocking ring housable in the at least an annular gully of the sleeve; said second blocking means being preferably identical to the first blocking means and/or provided with one or more of the characteristics described in the aspects and/or in the claims in relation to the first blocking means.

11. The fitting (1) of any one of the preceding claims, wherein said second tubular element comprises connecting means (20) to a fluid source, for example a conduit, a tap or a tank, and/or wherein the connecting means comprise a threaded portion destined to connect to a corresponding counter-thread of the fluid source such as to set the second tubular element in fluid communication with the fluid source, and/or wherein the fitting comprises a plurality of tubular elements in reciprocal fluid communication, each tubular element being preferably identical to the first or second tubular element.

12. A production method of a fitting for connecting pipes, in particular flexible pipes, the method comprising steps of:
- predisposing at least a first tubular element provided, at an end thereof, with a first inlet/outlet opening and defining internally thereof a first conduit;
- predisposing at least a second tubular element provided, at an end thereof, with a second inlet/outlet opening and defining internally thereof a second conduit;
the first and second conduit being connected to one another, at respective opposite ends, to the respective inlet/outlet opening, such that the first and second conduit are in communication with one another and overall define an assembled conduit of the fitting that sets the first opening and the second opening in fluid communication,
- predisposing a sleeve having a hollow cylindrical conformation and exhibiting a longitudinal axis of development;
- realising, on an external surface of the sleeve, at least an annular protrusion extending from the external surface;
- realising, on an internal surface of the sleeve, at the annular protrusion, at least an annular gully having a determined depth;
- predisposing a blocking ring, preferably having a thickness that is substantially equal to said determined depth of the annular gully;
- housing the blocking ring in the annular gully of the sleeve;
- mounting the sleeve to the first tubular element in such a way as to surround it externally and to create, between the internal surface of the sleeve and the first tubular element, an annular housing destined to insertingly receive a pipe, the pipe being interposed between the first tubular element and the sleeve, **characterized in that** it comprises a step of predisposing at least a sealing element and enveloping it externally of the first tubular element in such a way that the sealing element is interposed between the first tubular element and a pipe inserted in the annular housing.

13. The method of the preceding claim, wherein the steps of realising, on an external surface of the sleeve, at least an annular protrusion and realising, on an internal surface of the sleeve, at least an annular gully, are performed contemporaneously by means of an operation of plastic deformation of the sleeve, the plastic deformation of the sleeve being preferably obtained by means of a moulding and/or forming and/or mechanical working operation.

14. The method of claim 12 or 13, wherein the step of predisposing a blocking ring comprises at least a step of realising a closed blocking ring, having a toroidal conformation, and optionally an additional step of cutting the ring such as to interrupt the circumferential continuity of the ring, and/or wherein the step of housing the blocking ring in the annular gully of the sleeve occurs before or after the step of mounting the sleeve to the first tubular element,.

15. The method of any one of claims from 12 to 14, wherein the sealing element is a seal or an 0-ring, and/or wherein the steps of realising, on an external surface of the sleeve, at least an annular protrusion, and realising on an internal surface of the sleeve at least an annular gully are carried out on a same portion of the sleeve, along the longitudinal axis of development, and/or such that the annular protrusion and the annular gully are at the position occupied by the at least a sealing element on the tubular element.

## Patentansprüche

1. Anschluss (1) zum Verbinden von Rohren (T), wobei insbesondere mindestens ein Rohr der Rohre flexibel ist, umfassend:- mindestens ein erstes rohrförmiges Element (3), versehen an einem Ende mit einer ersten Einlass-/Auslassöffnung (3a), und definierend intern eine erste Leitung (3b);
- mindestens ein zweites rohrförmiges Element (4), versehen an einem Ende mit einer zweiten Einlass-/Auslassöffnung (4a), und definierend intern eine zweite Leitung (4b),
wobei das erste rohrförmige Element (3) und das zweite rohrförmige Element (4) miteinander an jeweiligen Enden, die gegenständig zur jeweiligen Einlass-/Auslassöffnung angeordnet sind, verbunden sind, sodass die erste Leitung (3b) und die zweite Leitung miteinander in Kommunikation stehen und insgesamt eine Zusammenbauleitung (2) definieren, wobei die erste Öffnung (3a) und die zweite Öffnung (4a) in Fluidkommunikation gebracht werden,
wobei der Anschluss zudem mindestens erste Spannmittel (10) umfasst, umfassend:
- eine Hülse (11), die an das erste rohrförmige Element (3) angeschlossen werden kann, sodass sie das erste rohrförmige Element (3) außenseitig umgibt, und zwischen der Hülse (11) und dem ersten rohrförmigen Element (3) ein ringförmiges Gehäuse (12) geschaffen wird, das dazu bestimmt ist, einfügend ein Rohr (T) aufzunehmen, wobei das Rohr (T) zwischen dem ersten rohrförmigen Element und der Hülse eingesetzt ist, wobei die Hülse eine Innenoberfläche (11a) aufweist, die dem ersten rohrförmigen Element (3) zugewandt ist, und eine Außenoberfläche (11b), und mit mindestens einem ringförmigen Vorsprung (13) versehen ist, der sich von der Außenoberfläche erstreckt, und mit mindestens einer ringförmigen Rinne (14), ausgebildet in der Innenoberfläche am ringförmigen Vorsprung (13);
- mindestens einen Spannring (15), der in der mindestens einen ringförmigen Rinne (14) der Hülse (11) untergebracht werden kann;
wobei die ersten Spannmittel (10) ausgelegt sind, um mindestens in einer Einfügekonfiguration zu arbeiten, in der sie das Einfügen eines Rohrs (T) in das ringförmige Gehäuse (12) ermöglichen, und einer festgespannten Konfiguration, in der sie das Rohr stabil und fluiddicht im ringförmigen Gehäuse festspannen, **dadurch gekennzeichnet, dass** das erste rohrförmige Element (3) mindestens ein erstes Dichtungselement (7) umfasst, das das rohrförmige Element außenseitig umhüllt, sodass es zwischen das rohrförmige Element und ein Rohr (T), eingefügt im ringförmigen Gehäuse (12), eingesetzt wird, wobei das erste Dichtungselement (7) verformbar ist, wenn sich die ersten Spannmittel (10) in der Spannkonfiguration befinden, sodass eine Fluidkommunikation zwischen der ersten Leitung (3b) und einer Außenoberfläche des ersten rohrförmigen Elements vermieden wird.

2. Anschluss (1) nach dem vorhergehenden Anspruch, wobei der Wechsel der ersten Spannmittel (10) von der Einfügekonfiguration in die Spannkonfiguration durch eine radiale Verformung der Hülse (11) in der Nähe des ersten rohrförmigen Elements (3) stattfindet, sodass das Rohr (T) zwischen der Hülse (11) und dem ersten Rohrelement (3) im ringförmigen Gehäuse (12) zusammengedrückt wird, wobei die Verformung durch das Wirken auf die Außenoberfläche (11b) der Hülse mit einem Klammerprofil (P1) einer Spannzange (P) realisiert wird, in der Lage, die Hülse plastisch zu verformen, und/oder wobei der Wechsel der Spannmittel (10) in die Spannkonfiguration eine Reduzierung der radialen Ausdehnung des ringförmigen Gehäuses (12) bewirkt, verursacht durch ein Annähern der Hülse (11) an das erste rohrförmige Element (3) und ein entsprechendes Zusammendrücken des Rohrs (T) im ringförmigen Gehäuse.

3. Anschluss (1) nach Anspruch 1 oder 2, wobei das rohrförmige Element (3) und die Hülse (11) eine Hohlzylinderbeschaffenheit aufweisen und dieselbe Längsentwicklungsachse (X) besitzen, und/oder wobei der Spannring (15) in der ringförmigen Rinne (14) der Hülse (11) untergebracht ist, sodass er im Wesentlichen bündig mit der Innenoberfläche (11a) der Hülse abschließt, und/oder sodass eine Innenoberfläche (11a) der Hülse realisiert wird, die im Wesentlichen zylindrisch ist und/oder einen konstanten Durchmesser entlang der gesamten Entwicklung der Hülse entlang der Längsentwicklungsachse (X) aufweist.

4. Anschluss (1) nach einem der vorhergehenden Ansprüche, wobei der ringförmige Vorsprung (13) und die ringförmige Rinne (14) im Wesentlichen an derselben Position der Hülse (11) entlang der Längsentwicklungsachse (X) realisiert sind.

5. Anschluss (1) nach einem der vorhergehenden Ansprüche, wobei der ringförmige Vorsprung (13) und die ringförmige Rinne (14) an einer Position der Hülse (11) entlang der Längsentwicklungsachse (X) realisiert sind, die in der Nähe oder an der Position befindlich ist, die das erste Dichtungselement (7) auf dem rohrförmigen Element (3) einnimmt, oder der ringförmige Vorsprung und die ringförmige Rinne im Wesentlichen entlang einer Ebene ausgerichtet sind, die senkrecht zur Längsentwicklungsachse verläuft.

6. Anschluss (1) nach einem der vorhergehenden Ansprüche, wobei das erste rohrförmige Element 30 ein zweites Dichtungselement (8) umfasst, das im Wesentlichen mit dem ersten Dichtungselement identisch ist, umhüllt außenseitig des ersten rohrförmigen Elements an einer anderen Position entlang der Längsentwicklungsachse.

7. Anschluss (1) nach einem der vorhergehenden Ansprüche, wobei die Hülse eine Dicke aufweist, die als Abstand zwischen der Innenoberfläche und der Außenoberfläche berechnet ist, die im Wesentlichen über eine gesamte Längsentwicklung davon gleichmäßig ist, und/oder wobei es sich beim Spannring um einen geschlossenen Ring handelt, der eine ringförmige Beschaffenheit aufweist, oder alternativ um einen Ring, der mit einem Einschnitt versehen ist.

8. Anschluss (1) nach einem der vorhergehenden Ansprüche, wobei das erste rohrförmige Element eine Vielzahl an Rippen (9) umfasst, die sich außenseitig des rohrförmigen Elements erstrecken und ein im Wesentlichen ringförmiges Profil aufweisen, wobei die Rippen eine Vielzahl an Griffen für das Rohr definieren, wenn sich die ersten Spannmittel in der Spannkonfiguration befinden, und/oder wobei sich die Rippen radial von der Außenoberfläche zum ersten rohrförmigen Element über einen Rippendurchmesser erstrecken, der größer ist als ein Außendurchmesser des ersten rohrförmigen Elements.

9. Anschluss (1) nach dem vorhergehenden Anspruch, wobei das erste Dichtungselement außenseitig des ersten rohrförmigen Elements zwischen zwei angrenzenden Rippen der Vielzahl an Rippen umhüllt ist, sodass es radial im Rippendurchmesser enthalten ist oder im Wesentlichen bündig mit der Entwicklung der Rippen abschließt, und/oder wobei das erste Dichtungselement zwischen zwei angrenzenden Rippen positioniert ist, sodass es nicht mit einem Rohr interferiert, das im ringförmigen Gehäuse eingefügt ist, und sodass keine Fluidabdichtung zwischen dem ersten rohrförmigen Element und dem Rohr realisiert wird, wenn sich die ersten Spannmittel in der Einfügekonfiguration befinden.

10. Anschluss (1) nach einem der vorhergehenden Ansprüche, zudem umfassen zweite Spannmittel, einschließend:
- eine jeweilige Hülse, die an das zweite rohrförmige Element angeschlossen ist, sodass sie diese außenseitig umgibt, und zwischen der Hülse und dem ersten rohrförmigen Element ein jeweiliges ringförmiges Gehäuse geschaffen wird, das dazu bestimmt ist, einfügend ein Rohr aufzunehmen, wobei das Rohr zwischen dem zweiten rohrförmigen Element und der Hülse eingesetzt ist, wobei die jeweilige Hülse eine Innenoberfläche aufweist, die dem zweiten rohrförmigen Element zugewandt ist, und eine Außenoberfläche, und mit mindestens einem ringförmigen Vorsprung versehen ist, der sich von der Außenoberfläche erstreckt, und mit mindestens einer ringförmigen Rinne, ausgestaltet in der Innenoberfläche am ringförmigen Vorsprung;
- einen jeweiligen Spannring, der in der mindestens einen ringförmigen Rinne der Hülse untergebracht werden kann;
wobei die zweiten Spannmittel vorzugsweise mit den ersten Spannmitteln identisch sind und/oder mit einem oder mehreren der Merkmale versehen sind, die in den Aspekten und/oder den Ansprüchen in Bezug auf die ersten Spannmittel beschrieben sind.

11. Anschluss (1) nach einem der vorhergehenden Ansprüche, wobei das zweite rohrförmige Element Mittel zur Verbindung (20) mit einer Fluidquelle umfasst, zum Beispiel eine Leitung, einen Hahn oder einen Behälter, und/oder wobei die Verbindungsmittel einen Gewindeabschnitt umfassen, der dazu bestimmt ist, mit einem entsprechenden Gegengewinde der Fluidquelle verbunden zu werden, sodass das zweite rohrförmige Element in Fluidkommunikation mit der Fluidquelle gebracht wird, und/oder wobei der Anschluss eine Vielzahl an rohrförmigen Elementen in gegenseitiger Fluidkommunikation umfasst, wobei ein jedes rohrförmiges Element vorzugsweise mit dem ersten oder zweiten rohrförmigen Element identisch ist.

12. Verfahren zur Herstellung eines Anschlusses zum Verbinden von Rohren, insbesondere flexible Rohre, wobei das Verfahren folgende Schritte umfasst:
- Vorbereiten mindestens eines ersten rohrförmigen Elements, versehen an einem Ende mit einer ersten Einlass-/Auslassöffnung, und definierend intern eine erste Leitung;
- Vorbereiten mindestens eines zweiten rohrförmigen Elements, versehen an einem Ende mit einer zweiten Einlass-/Auslassöffnung, und definierend intern eine zweite Leitung;
wobei die erste und die zweite Leitung miteinander an jeweiligen entgegengesetzten Enden mit den jeweiligen Einlass-/Auslassöffnung verbunden sind, sodass die erste und die zweite Leitung miteinander in Kommunikation stehen und insgesamt eine zusammengebaute Leitung des Anschlusses definieren, das die erste Öffnung und die zweite Öffnung in Fluidkommunikation setzt;
- Vorbereiten einer Hülse, aufweisend eine Hohlzylinderbeschaffenheit und eine Längsentwicklungsachse;
- Realisieren mindestens eines ringförmigen Vorsprungs, sich erstreckend von der Außenoberfläche, auf einer Außenoberfläche der Hülse;
- Realisieren mindestens einer ringförmigen Rinne auf eine Innenoberfläche der Hülse am ringförmigen Vorsprung, aufweisend eine vorgegebene Tiefe;
- Vorbereiten eines Spannrings, vorzugsweise aufweisend eine Dicke, die im Wesentlichen gleich der vorgegebenen Tiefe der ringförmigen Rinne ist;
- Unterbringen des Spannrings in der ringförmigen Rinne der Hülse;
- Montieren der Hülse am ersten rohrförmigen Element, sodass dieses außenseitig umgeben und zwischen der Innenoberfläche der Hülse und dem ersten rohrförmigen Element ein ringförmiges Gehäuse geschaffen wird, das dazu bestimmt ist, einfügend ein Rohr aufzunehmen, wobei das Rohr zwischen dem ersten ringförmigen Element und der Hülse eingesetzt ist, **dadurch gekennzeichnet, dass** es einen Schritt zum Vorbereiten von mindestens einem Dichtungselement und dessen Umhüllen außenseitig des ersten rohrförmigen Elements umfasst, sodass das Dichtungselement zwischen dem ersten rohrförmigen Element und einem im ringförmigen Gehäuse eingefügten Rohr eingesetzt ist.

13. Verfahren nach dem vorhergehenden Anspruch, wobei die Schritte zum Realisieren mindestens eines ringförmigen Vorsprungs an einer Außenoberfläche der Hülse und zum Realisieren mindestens einer ringförmigen Rille an einer Innenoberfläche der Hülse gleichzeitig mittels eines Vorgangs der plastischen Verformung der Hülse durchgeführt werden, wobei die plastische Verformung der Hülse vorzugsweise durch einen Gieß- und/oder Formungs- und/oder mechanischen Bearbeitungsvorgang erhalten wird.

14. Verfahren nach Anspruch 12 oder 13, wobei der Schritt zum Vorbereiten eines Spannrings mindestens einen Schritt zum Realisieren eines geschlossenen Spannrings umfasst, aufweisend eine ringförmige Beschaffenheit, und optional einen zusätzlichen Schritt zum Schneiden des Rings, sodass der durchgehende Umfang des Rings unterbrochen wird, und/oder wobei der Schritt zum Unterbringen des Spannrings in der ringförmigen Rinne der Hülse vor oder nach dem Schritt zum Montieren der Hülse am ersten rohrförmigen Element stattfindet.

15. Verfahren nach einem der Ansprüche 12 bis 14, wobei es sich beim Dichtungselement um eine Dichtung oder einen O-Ring handelt und/oder wobei die Schritte zum Realisieren mindestens eines ringförmigen Vorsprungs an einer Außenoberfläche der Hülse und zum Realisieren mindestens einer ringförmigen Rille an einer Innenoberfläche der Hülse an einem gleichen Abschnitt der Hülse entlang der Längsentwicklungsachse durchgeführt werden, und/oder so, dass der ringförmige Vorsprung und die ringförmige Rinne sich an der Position befinden, die vom mindestens einen Dichtungselement am rohrförmigen Element eingenommen wird.

## Revendications

1. Raccord (1) destiné à raccorder des tuyaux (T), notamment au moins l'un des tuyaux étant flexible, comprenant :
- au moins un premier élément tubulaire (3) avec, à son extrémité, une première ouverture entrée/sortie (3a) et formant à l'intérieur 5 un premier conduit (3b) ;
- au moins un second élément tubulaire (4) avec, à son extrémité, une seconde ouverture entrée/sortie (4a) et formant à l'intérieur un second conduit (4b) ;
ledit premier élément tubulaire (3) et ledit second élément tubulaire (4) étant raccordés l'un à l'autre, à des extrémités respectives opposées à l'ouverture entrée/sortie respective, de sorte que ledit premier conduit (3b) et ledit second conduit communiquent l'un avec l'autre et forment ensemble un conduit d'assemblage (2), mettant ladite première ouverture (3a) et ladite seconde ouverture (4a) en communication fluidique,
le raccord comportant également au moins des premiers moyens de blocage (10) comprenant :
- un manchon (11) pouvant être associé au premier élément tubulaire (3) pour entourer le premier élément tubulaire (3) à l'extérieur et pour former, entre le manchon (11) et le premier élément tubulaire (3), un logement annulaire (12) destiné à recevoir par insertion un tuyau (T), le tuyau (T) étant interposé entre le premier élément tubulaire et le manchon, ledit manchon présentant une surface interne (11a) orientée vers le premier élément tubulaire (3) et une surface externe (11b), et étant muni d'au moins une saillie annulaire (13) se développant depuis ladite surface externe et d'au moins un drain annulaire (14) réalisé dans ladite surface interne au niveau de ladite saillie annulaire (13) ;
- au moins une bague de blocage (15) pouvant être logée dans ledit au moins un drain annulaire (14) dudit manchon (11) ;
lesdits premiers moyens de blocage (10) étant configurés pour fonctionner au moins dans une configuration d'insertion, dans laquelle ils permettent l'insertion d'un tuyau (T) dans ledit logement annulaire (12), et dans une configuration de blocage, dans laquelle ils bloquent de façon stable et étanche le tuyau dans le logement annulaire, **caractérisé en ce que** le premier élément tubulaire (3) comprend au moins un premier élément d'étanchéité (7) enveloppant à l'extérieur l'élément tubulaire, de sorte à être interposé entre l'élément tubulaire et un tuyau (T) inséré dans ledit logement annulaire (12), ledit premier élément d'étanchéité (7) étant déformable quand les premiers moyens de blocage (10) se trouvent dans la configuration de blocage, pour empêcher une communication fluidique entre le premier conduit (3b) et une surface externe du premier élément tubulaire.

2. Raccord (1) selon la revendication précédente, dans lequel le passage des premiers moyens de blocage (10) de la configuration d'insertion à la configuration de blocage se produit par une déformation radiale du manchon (11), à proximité du premier élément tubulaire (3), de sorte à comprimer le tuyau (T) entre le manchon (11) et le premier élément tubulaire (3) à l'intérieur du logement annulaire (12), la déformation se faisant sous l'action, sur la surface externe (11b) du manchon, d'un profil de serrage (P1) d'une pince de blocage (P), en mesure de déformer plastiquement le manchon, et/ou dans lequel le passage des moyens de blocage (10) dans la configuration de blocage entraîne une réduction du développement radial du logement annulaire (12), provoquée par un rapprochement du manchon (11) au premier élément tubulaire (3) et, par conséquent, une compression du tuyau (T) à l'intérieur du logement annulaire.

3. Raccord (1) selon les revendications 1 ou 2, dans lequel le premier élément tubulaire (3) et le manchon (11) présentent une forme cylindrique creuse et ont un même axe de développement 10 longitudinal (X), et/ou dans lequel ladite bague de blocage (15) est logée dans ledit drain annulaire (14) du manchon (11), de sorte à être essentiellement de niveau avec la surface interne (11a) du manchon et/ou de sorte à former une surface interne (11a) du manchon qui est essentiellement cylindrique et/ou qui a un diamètre constant sur tout le développement du manchon le long de l'axe de développement longitudinal (X).

4. Raccord (1) selon l'une quelconque des revendications précédentes, dans lequel ladite saillie annulaire (13) et ledit drain annulaire (14) se trouvent essentiellement dans une même position du manchon (11) le long de l'axe de développement longitudinal (X).

5. Raccord (1) selon l'une quelconque des revendications précédentes, dans lequel ladite saillie annulaire (13) et ledit drain annulaire (14) se trouvent dans une position du manchon (11), le long dudit axe de développement longitudinal (X), qui est proche de ou à la position occupée par le premier élément d'étanchéité (7) sur l'élément tubulaire (3), ou la saillie annulaire et le drain annulaire sont essentiellement alignés sur un plan perpendiculaire à l'axe de développement longitudinal.

6. Raccord (1) selon l'une quelconque des revendications précédentes, dans lequel le premier élément tubulaire 30 comprend un second élément d'étanchéité (8), essentiellement identique au premier élément d'étanchéité, enveloppé à l'extérieur du premier élément tubulaire dans une position différente le long de l'axe de développement longitudinal.

7. Raccord (1) selon l'une quelconque des revendications précédentes, dans lequel le manchon a une épaisseur, calculée comme la distance entre la surface interne et la surface externe, qui est essentiellement uniforme sur tout son développement longitudinal, et/ou dans lequel la bague de blocage est une bague fermée présentant une forme toroïdale ou, en alternative, est une bague avec une entaille.

8. Raccord (1) selon l'une quelconque des revendications précédentes, dans lequel le premier élément tubulaire comprend une pluralité de nervures (9), se développant à l'extérieur de l'élément tubulaire et présentant un profil essentiellement annulaire, les nervures formant une pluralité de prises pour le tuyau quand les premiers moyens de blocage se trouvent dans la configuration de blocage, et/ou dans lequel les nervures se développent radialement depuis la surface externe du premier élément tubulaire sur un diamètre de nervure supérieur à un diamètre extérieur du premier élément tubulaire.

9. Raccord (1) selon la revendication précédente, dans lequel le premier élément d'étanchéité est enveloppé à l'extérieur du premier élément tubulaire, entre deux nervures adjacentes de la pluralité de nervures, de sorte à être compris radialement dans le diamètre de la nervure ou de sorte à être essentiellement de niveau avec le développement des nervures, et/ou dans lequel le premier élément d'étanchéité se situe entre deux nervures adjacentes de sorte à ne pas interférer avec un tuyau inséré dans le logement annulaire et de sorte à ne pas former un joint d'étanchéité entre le premier élément tubulaire et le tuyau quand les premiers moyens de blocage se trouvent dans la configuration d'insertion.

10. Raccord (1) selon l'une quelconque des revendications précédentes, comprenant également des seconds moyens de blocage comportant :
- un manchon respectif associé au second élément tubulaire pour l'entourer à l'extérieur et pour former, entre le manchon et le second élément tubulaire, un logement annulaire respectif destiné à recevoir par insertion un tuyau, le tuyau étant interposé entre le second élément tubulaire et le manchon, ledit manchon respectif présentant une surface interne orientée vers le second élément tubulaire et une surface externe, et étant muni d'au moins une saillie annulaire se développant depuis la surface externe et d'au moins un drain annulaire réalisé dans la surface interne au niveau de la saillie annulaire ;
- une bague de blocage respective pouvant être logée dans l'au moins un drain annulaire du manchon ;
lesdits seconds moyens de blocage étant, de préférence, identiques aux premiers moyens de blocage et/ou présentant une ou plusieurs des caractéristiques décrites dans les aspects et/ou dans les revendications relatives aux premiers moyens de blocage.

11. Raccord (1) selon l'une quelconque des revendications précédentes, dans lequel ledit second élément tubulaire comprend des moyens de raccordement (20) à une source de liquide, par exemple un conduit, un robinet ou un réservoir, et/ou dans lequel les moyens de raccordement comprennent une partie filetée destinée à se raccorder à un contrefilet correspondant de la source de liquide de sorte à placer le second élément tubulaire en communication fluidique avec la source de liquide, et/ou dans lequel le raccord comprend une pluralité d'éléments tubulaires en communication fluidique réciproque, chaque élément tubulaire étant, de préférence, identique au premier élément tubulaire ou au second élément tubulaire.

12. Procédé de fabrication d'un raccord destiné à raccorder des tuyaux, notamment des tuyaux flexibles, le procédé comprenant les étapes suivantes :
- préparer au moins un premier élément tubulaire avec, à son extrémité, une première ouverture entrée/sortie et formant à l'intérieur un premier conduit ;
- préparer au moins un second élément tubulaire avec, à son extrémité, une seconde ouverture entrée/sortie et formant à l'intérieur un second conduit ;
le premier conduit et le second conduit étant raccordés l'un à l'autre, à des extrémités respectives opposées à l'ouverture entrée/sortie respective, de sorte que le premier conduit et le second conduit communiquent l'un avec l'autre et forment ensemble un conduit assemblé du raccord qui met la première ouverture et la seconde ouverture en communication fluidique,
- préparer un manchon avec une forme cylindrique creuse et présentant un axe de développement longitudinal ;
- former, sur une surface externe du manchon, au moins une saillie annulaire se développant depuis la surface externe ;
- former, sur une surface interne du manchon, au niveau de la saillie annulaire, au moins un drain annulaire présentant une profondeur déterminée ;
- préparer une bague de blocage avec, de préférence, une épaisseur essentiellement égale à ladite profondeur déterminée du drain annulaire ;
- loger la bague de blocage dans le drain annulaire du manchon ;
- monter le manchon sur le premier élément tubulaire de sorte à l'entourer à l'extérieur et à former, entre la surface interne du manchon et le premier élément tubulaire, un logement annulaire destiné à recevoir par insertion un tuyau, le tuyau étant interposé entre le premier élément tubulaire et le manchon, **caractérisé en ce qu'**il comprend une étape de préparer au moins un élément d'étanchéité et de l'envelopper à l'extérieur du premier élément tubulaire de sorte que l'élément d'étanchéité est interposé entre le premier élément tubulaire et un tuyau inséré dans le logement annulaire.

13. Procédé selon la revendication précédente, dans lequel les étapes de former, sur une surface externe du manchon, au moins une saillie annulaire et de former, sur une surface interne du manchon, au moins un drain annulaire, sont réalisées en même temps par une opération de déformation plastique du manchon, la déformation plastique du manchon étant obtenue, de préférence, à l'aide d'une opération de moulage et/ou de façonnage et/ou d'usinage mécanique.

14. Procédé selon les revendications 12 ou 13, dans lequel l'étape de préparer une bague de blocage comprend au moins une étape de fabriquer une bague de blocage fermée avec une forme toroïdale, et en option, une étape supplémentaire de couper la bague pour interrompre la continuité circonférentielle de la bague, et/ou dans lequel l'étape de loger la bague de blocage dans le drain annulaire du manchon a lieu avant ou après l'étape de monter le manchon sur le premier élément tubulaire.

15. Procédé selon l'une quelconque des revendications de 12 à 14, dans lequel l'élément d'étanchéité est un joint ou un joint torique, et/ou dans lequel les étapes de former, sur une surface externe du manchon, au moins une saillie annulaire et de former, sur une surface interne du manchon, au moins un drain annulaire, sont faites sur une même partie du manchon, le long de l'axe de développement longitudinal, et/ou de sorte que la saillie annulaire et le drain annulaire se trouvent dans la position occupée par l'au moins un élément d'étanchéité sur l'élément tubulaire.
